# EUROPEAN PATENT SPECIFICATION

(11) **EP 4 276 285 B1**
(45) Date of publication and mention of the grant of the patent: **28.01.2026**
(21) Application number: 23173464.1
(22) Date of filing: 15.05.2023
(51) Int. Cl.: F01D 11/00, F01D 5/28, F01D 5/30, F01D 9/04

(54) **CMC ARC SEGMENT INTERFACE GAP FLOW BLOCKER**
CMC-STRÖMUNGSSPERRE FÜR SEGMENTSCHNITTSTELLEN
DISPOSITIF CMC DE BLOCAGE D'ESPACE D'INTERFACE DE SEGMENT D'ARC

(30) Priority: 13.05.2022 US 202217744560
(43) Date of publication of application: 15.11.2023
(73) Proprietor: RTX Corporation, Farmington, CT 06032 (US)
(72) Inventor: WHITE III, Robert A., Meriden, 06450 (US); LAZUR, Andrew Joseph, La Jolla, 92037 (US)
(74) Representative: Dehns

(56) References cited:
- EP-A1- 3 620 612
- US-A1- 2017 058 686
- US-A1- 2017 107 837
- US-A1- 2020 191 005
- US-B2- 10 436 041

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils and other components in the turbine section are typically formed of a superalloy and may include thermal barrier coatings to extend temperature capability and lifetime. Ceramic matrix composite ("CMC") materials are also being considered for these components. Among other attractive properties, CMCs have high temperature resistance. Despite this attribute, however, there are unique challenges to implementing CMCs.

US 2017/058686 A1 discloses a prior art gas turbine engine according to the preamble of claim 1.

### SUMMARY

A gas turbine engine according to an example of the present disclosure includes a full hoop support ring adjacent an engine core gas path and a plurality of ceramic matrix composite (CMC) arc segments arranged in a row between the full hoop support ring and the engine core gas path such that the CMC arc segments bound a portion of the engine core gas path. Each of the CMC arc segments has a core gas path side, an opposed non-core gas path side, an axially forward-facing leading side, and axially aft-facing trailing side, a first circumferential mate face, and a second circumferential mate face. The first circumferential mate face mates at an interface with the second circumferential mate face of an adjacent one of the CMC arc segments in the row. The non-core gas path side and the full hoop support ring radially bound there between an axially-extending passage. There is a leak path through which gas from the engine core gas path can bypass an axial section of the engine core gas path. The leak path extends from an upstream high pressure zone of the engine core gas path, then through an upstream location of the interface into the axially-extending passage, then through the axially-extending passage, then through a downstream location of the interface, and then into a downstream low pressure zone of the engine core gas path. A CMC strip is disposed at the interface and blocks the leak path to reduce leakage of the gas through the leak path.

In a further embodiment of any of the foregoing embodiments, the CMC strip includes fibers disposed in a ceramic matrix, and the fibers have less than 500 filaments per fiber.

In a further embodiment of any of the foregoing embodiments, the CMC strip includes, by volume, 30% to 70% of ceramic fibers and 70% to 30% of ceramic matrix.

In a further embodiment of any of the foregoing embodiments, the ceramic fibers are silicon carbide and the ceramic matrix is silicon carbide.

In a further embodiment of any of the foregoing embodiments, the first circumferential mate face has a first groove, the second circumferential mate face has a second groove that faces the first groove such that the first groove and the second groove form a slot, and the CMC strip is disposed in the slot.

In a further embodiment of any of the foregoing embodiments, the slot includes a coating.

In a further embodiment of any of the foregoing embodiments, the coating is a silicon-containing coating.

In a further embodiment of any of the foregoing embodiments, the first circumferential mate face has a first groove, the second circumferential mate face has a second groove that faces the first groove such that the first groove and the second groove form a slot, the first circumferential mate face has a land that interrupts the first groove, the CMC strip is disposed in the slot, and the CMC strip includes a notch that fits over the land.

In a further embodiment of any of the foregoing embodiments, the CMC arc segments are uncooled.

In a further embodiment of any of the foregoing embodiments, the CMC arc segments are airfoil fairings.

A further embodiment of any of the foregoing embodiments includes a compressor section, a combustor in fluid communication with the compressor section, and a turbine section in fluid communication with the combustor, and the CMC arc segments are in the turbine section.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a vane assembly of the engine.
Figure 3 illustrates a CMC arc segment.
Figure 4 illustrates a leak path through a CMC arc segment.
Figure 5 illustrates a CMC strip for blocking flow in a leak path.
Figure 6 illustrates another example of a CMC member in which the strip has a notch.

### DETAILED DESCRIPTION

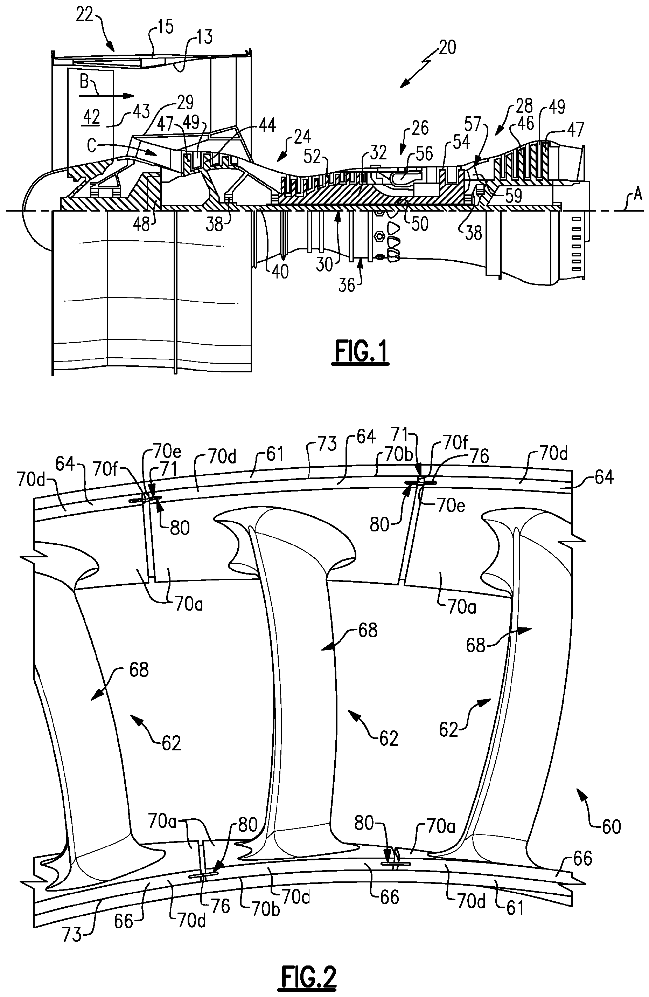

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core gas path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core gas path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

To demonstrate an example implementation in accordance with this disclosure, Figure 2 illustrates an axial view (looking forward in the engine 20) of a representative portion of a vane ring assembly 60 from the turbine section 28 of the engine 20. The vane ring assembly 60 is made up of a plurality of ceramic matrix composite ("CMC") arc segments 62 (three shown) that are situated in a circumferential row about the engine central axis A. The CMC arc segments 62 are supported in the engine by one or more full hoop support rings 61 adjacent the core gas path C. The full hoop support ring(s) 61 may also be formed of CMC material. The full hoop support ring(s) 61 are continuous rings that have no intersegment gaps or seams (i.e., unsegmented) and few or no through-holes.

In the illustrated example, the CMC arc segments 62 are CMC vane arc segments and are supported radially between two of the full hoop support rings 61 (radially inner and outer). The CMC vane arc segments are singlets (single airfoil) in the example shown, but they could alternatively be doublets (two airfoils) or greater (multiplets). It is to be further understood that that the examples herein are not limited to vanes or to the turbine section 28, and the examples may also be applicable to other types of CMC arc segments in the engine 20, such as but not limited to, blade outer air seals, turbine blades, and liners.

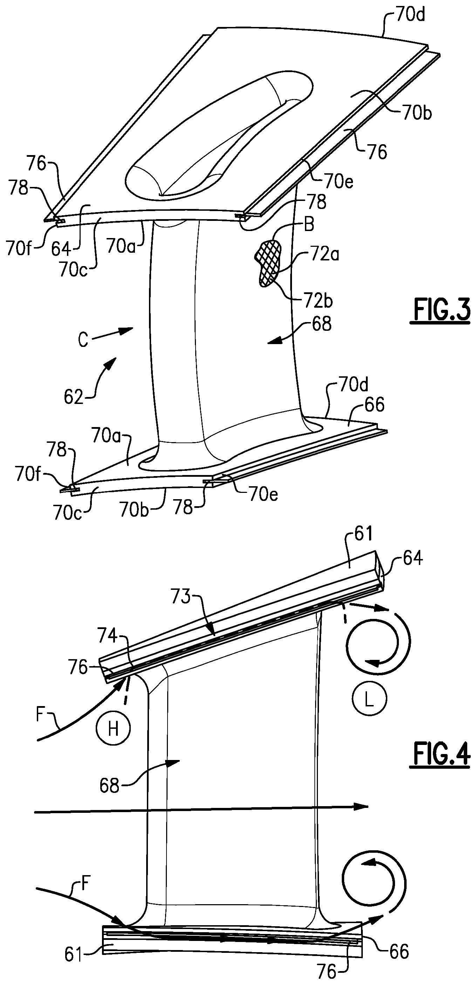

Referring also to Figure 3, which illustrates an isolated view of one of the CMC vane arc segments, each vane arc segment is a one-piece structure that is comprised of several sections, including first and second platforms 64/66 and an airfoil section 68 that extends between the platforms 64/66. The airfoil section 68 in this example is hollow and generally defines a leading end, a trailing end, and pressure and suction sides. The CMC arc segment 62 is "uncooled" in that there is no cooling air (e.g., compressor bleed air) provided for cooling. Thus, there need not be holes, ports, or the like in the full hoop support ring(s) 61 for that purpose. With no intersegment gaps and few or no holes, there are fewer or no leak paths to seal to prevent leaking of core gases from the core gas path C.

In this example, the first platform 64 of the CMC vane arc segment is a radially outer platform and the second platform 66 is a radially inner platform. It is also contemplated, however, that in modified examples the CMC vane arc segment could alternatively have the first platform 64 as a single platform, with no second platform 66, in which case the single platform may be at either the radially inner or outer end of the airfoil section 68. Terms such as "inner" and "outer" used herein refer to location with respect to the central engine axis A, i.e., radially inner or radially outer. Moreover, the terminology "first" and "second" used herein is to differentiate that there are two architecturally distinct components or features. It is to be further understood that the terms "first" and "second" are interchangeable in that a first component or feature could alternatively be termed as the second component or feature, and vice versa.

Each of the platforms 64/66 defines a core gas path side 70a, an opposed non-core gas path side 70b, an axially forward-facing leading side 70c, and axially aft-facing trailing side 70d, a first circumferential mate face 70e, and a second circumferential mate face 70f. A CMC arc segment 62 other than a vane may have analogous sides on the main body of the component rather than a platform. Referring to Figure 2, the CMC vane arc segments are arranged in a circumferential row such that the first circumferential mate face 70e of each CMC vane arc segment mates at an interface 71 with the second circumferential mate face 70f of the next adjacent CMC vane arc segment. The non-core gas path side 70a and the full hoop support ring 61 radially bound there between an axially-extending passage 73, and the core gas path sides 70a bound an axial section of the core gas path C. The non-core gas path side 70a and the full hoop support ring 61 may be in interfacial contact such that the axially-extending passage 73 is radially very thin. More likely, however, there will be mounting features between the non-core gas path side 70a and the full hoop support ring 61, such as flanges, mounting blocks, or the like, such that the axially-extending passage 73 is a gap that is comparatively radially thicker.

The CMC vane arc segments are continuous in that the platforms 64/66 and airfoil section 68 constitute a single, uninterrupted body. In the example in Figure 3, referring to cutaway section B, the CMC includes ceramic fibers 72a that are disposed in a ceramic matrix 72b. The CMC may be, but is not limited to, a SiC/SiC composite in which SiC fibers are disposed within a SiC matrix. The ceramic fibers 72a may be provided in fiber plies. The fiber plies may be woven or unidirectional and may collectively include plies of different fiber weave configurations. The fiber plies are continuous through at least the platform 64, the airfoil section 68, and the second platform 66. The full hoop support ring 61, if made of CMC, may also be, but is not limited to, a SiC/SiC composite and may have the same or different fiber configuration as the CMC vane arc segments.

During operation of the engine hot combustion gases flow through the core gas path C and axially across the airfoil section 68. In general, there is a pressure differential between upstream and downstream locations in the core gas path in the turbine section 28. For instance, referring to Figure 4, at an upstream location forward of the airfoil section 68 there is a high pressure zone H and at a downstream location aft of the airfoil section 68 there is a low pressure zone L. In segmented components that are cooled with compressor bleed air, pressurized bleed air can be provided at intersegment gaps to limit inflow leakage of gases from the core gas path C into the intersegment gaps. However, in uncooled components, such as the CMC arc segments 62, there is no compressor bleed air to serve that function. The combustion gas flow (represented by flow arrows F) will thus tend to find a leak path 74 into the gaps at the interfaces 71 through which the combustion gases can bypass the axial section of the core gas path C without flowing across the airfoil section 68. For instance, the leak path 74 extends from the upstream high pressure zone H, then through an upstream location of the interface 71 into the axially-extending passage 73, then through the axially-extending passage 73, then through a downstream location of the interface 71, and then into the downstream low pressure zone L.

In this regard, there is a CMC member 76 disposed at the interface 71 that blocks the leak path 74 to reduce leakage of the combustion gas flow through the leak path 74. As an example, leakage may be measured or estimated in units of pound mass per second (lbm/s). The CMC member 76 may generally be of the same composition as the CMC of the CMC arc segment 62, such as a SiC/SiC composite.

Referring to Figure 3, in this example each of the circumferential mate faces 70e/70f has a groove 78. Each of the grooves 78 is substantially U-shaped and opens in the circumferential direction. The axial ends of the grooves 78 open, respectively, at the axially forward-facing leading side 70c and the axially aft-facing trailing side 70d. That is, the grooves 78 extend the full axial length of the platforms 64/66, though they could alternatively terminate short of the sides 70c/70d. The groove 78 of the circumferential mate face 70e faces toward the groove 78 of the circumferential mate face 70f of the next adjacent CMC arc segment 62 such that the grooves 78 together form a slot 80. The CMC member 76 is retained in the slot 80 and bridges the intersegment gap. The gap between the mate faces 70e/70f is sized such that the CMC member 76 is entrapped in the slot 80. The grooves 78, however, are not so large as to pinch or constrict the CMC member 76. In that regard, the CMC member 76 is free-floating in the slot 80.

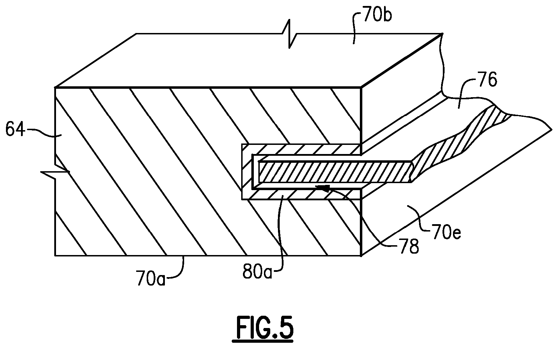

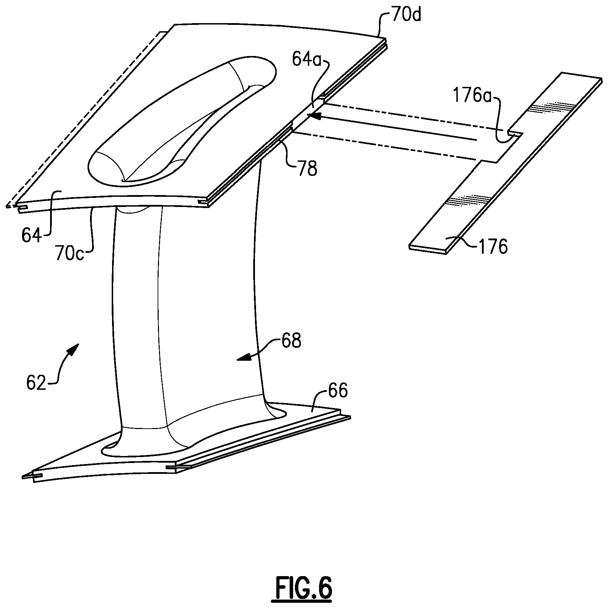

Figure 5 illustrates a sectioned cutaway view of a representative region near one of the grooves 78. As shown, the CMC member 76 in this example is CMC strip. The CMC strip is elongated in the axial direction and is of substantially constant thickness and width. It is to be understood, however, that the CMC member 76 could alternatively have other geometries. For instance, Figure 6 illustrates another example CMC member 176 that is the same as CMC member 76 except that it includes a notch 176a. In this example, the notch 176a is rectangular, but it could alternatively be rounded as a scallop. The CMC member 176 may include multiple notches 176a along its length. The notch or notches 176a correspond to locations on the platform 64 where it is undesirable to have the groove 78, such as locations where the platform 64 may be highly loaded. In this regard, the platform 64 includes a land 64a where the groove 78 is interrupted. The notch 176a fits over the land 64a, thereby also constraining axial movement of the CMC member 176. Such axial constraint may also prevent the CMC member 176 from moving through the open ends of the groove 78 at the axially forward-facing leading side 70c and the axially aft-facing trailing side 70d.

The CMC member 76 serves as a physical barrier to flow, as opposed to a seal per se. A seal necessarily provides a tight fit against a mating surface and the tight fit substantially prevents flow between the seal and the surface. For example, feather seals that are sometimes used in mate face gaps are pressurized (by compressor bleed air) against a mating wall and are highly compliant in order to closely conform and seal against the wall. The CMC member 76 may bear against the sides of the grooves 78 and in that sense may provide modest physical sealing, but it does not necessarily tightly seal as a feather seal does.

The CMC member 76 is adapted to facilitate physical blocking of the gas flow through the leak path 74. In this regard, the CMC member 76 is formed to have smooth surfaces and low porosity. For example, the CMC member 76 is formed with ceramic fibers of relatively low filament count, such as less than 500 filaments per fiber or less than 250 filaments per fiber. The configuration of the fibers manifests as a surface roughness on the CMC member 76 in that there are undulations over the fibers because they do not lay completely flat. The low filament count produces a finer filament architecture that, in comparison to higher filament counts, reduces the surface roughness and thus reduces the size of small gaps between the sides of the grooves 78 and the CMC member 76. Additionally, a low filament count reduces the size of intra-fiber gaps between the filaments that may otherwise provide leak paths through the CMC member 76. A high fiber packing content may also be used in the CMC member 76 to reduce inter-fiber gaps. For example, the CMC member 76 may include, by volume, 30% to 70% of ceramic fibers and 70% to 30% of ceramic matrix. **In** one further example, the CMC member 76 includes 40% to 60% of ceramic fibers and 60% to 40% of ceramic matrix

The fabrication of the CMC member 76 may also be selected to enhance blocking of the flow. For example, a process such as chemical vapor infiltration used to deposit the matrix material may result in a relatively high porosity. In some instances this porosity may still provide acceptable flow-blocking. However, processes such as melt infiltration or polymer infiltration and pyrolysis provide lower porosities that may in turn provide better flow-blocking. In general, the bulk porosity, by volume percentage, of the CMC member 76 is 25% or less.

The fiber architecture of the fibers of the CMC member 76 may be a 3-D weave, a 2-D weave, 2-D/3-D braids/knits, unidirectional, 2-D/3-D laminates/preformed structures, or combinations of these. In some cases, the fiber architecture may also be selected to enhance the ability of the CMC member 76 to block flow. For example, a 3-D woven architecture, in comparison to a 2-D architecture, may provide greater compliance that enables the CMC member 76 to better conform to the sides of the grooves 78, as well as a smoother surface. Example 3-D architectures include 3-D weave, layer-to-layer, through-thickness, or orthogonal angle interlocking.

As also shown in the example in Figure 5, the grooves 78 may include a coating 80a that provides a smoother surface than the underlying surface of the platform 64 for the CMC member 76 to bear against. For instance, the coating is a silicon-containing coating that is applied and then machined to a desired smoothness. As an example, the silicon-containing coating is mullite, elemental silicon, silicon-molybdenum, or a slurry-coated silicon carbide. Alternatively, if the CMC arc segment 62 has an environmental barrier coating (EBC), the EBC may be machined smooth to serve the same purpose. An EBC may be multi-layered and include one or more bond coat layers and a topcoat layer. Such layers may be selected from, but are not limited to, silicate, HfO₂, rare earth monosilicate (RESiO₅), HfSiO₄, Y₂Si₂O₇, Yb₂Si₂O₇, alkaline earth aluminosilicates (AEAl₂Si₂O₈), Ca₂Y₈(SiO₄)₆O₂, Gd₂Hf₂O₇, Gd₂Si₂O₇, or mixtures thereof.

The preceding description is exemplary rather than limiting in nature. Variations and modifications to the disclosed examples may become apparent to those skilled in the art that do not necessarily depart from this disclosure. The scope of legal protection given to this invention can only be determined by studying the following claims.

## Claims

1. A gas turbine engine (20) comprising:
a full hoop support ring (61) adjacent an engine core gas path (C);
a plurality of ceramic matrix composite (CMC) arc segments (62) arranged in a row between the full hoop support ring (61) and the engine core gas path (C) such that the CMC arc segments (62) bound a portion of the engine core gas path (C), each of the CMC arc segments (62) having a core gas path side (70a), an opposed non-core gas path side (70b), an axially forward-facing leading side (70c), and axially aft-facing trailing side (70d), a first circumferential mate face (70e), and a second circumferential mate face (70f), the first circumferential mate face (70e) mating at an interface (71) with the second circumferential mate face (70f) of an adjacent one of the CMC arc segments (62) in the row, the non-core gas path side (70b) and the full hoop support ring (61) radially bounding there between an axially-extending passage (73); and
a leak path (74) through which gas from the engine core gas path (C) can bypass an axial section of the engine core gas path (C), the leak path (74) extending from an upstream high pressure zone (H) of the engine core gas path (C), then through an upstream location of the interface (71) into the axially-extending passage (73), then through the axially-extending passage (73), then through a downstream location of the interface (71), and then into a downstream low pressure zone (L) of the engine core gas path (C);
**characterised in that**:
the gas turbine engine (20) further comprises a CMC strip (76; 176) disposed at the interface (71), the CMC strip (76; 176) blocking the leak path (74) to reduce leakage of the gas through the leak path (74).

2. The gas turbine engine (20) as recited in claim 1, wherein the CMC strip (76; 176) includes fibers disposed in a ceramic matrix, and the fibers have less than 500 filaments per fiber.

3. The gas turbine engine (20) as recited in claim 1 or 2, wherein the CMC strip (76; 176) includes, by volume, 30% to 70% of ceramic fibers and 70% to 30% of ceramic matrix.

4. The gas turbine engine (20) as recited in claim 3, wherein the ceramic fibers are silicon carbide and the ceramic matrix is silicon carbide.

5. The gas turbine engine (20) as recited in any preceding claim, wherein the first circumferential mate face (70e) has a first groove (78), the second circumferential mate face (70f) has a second groove (78) that faces the first groove (78) such that the first groove (78) and the second groove (78) form a slot (80), and the CMC strip (76; 176) is disposed in the slot (80).

6. The gas turbine engine (20) as recited in claim 5, wherein the slot (80) includes a coating (80a).

7. The gas turbine engine (20) as recited in claim 6, wherein the coating (80a) is a silicon-containing coating.

8. The gas turbine engine (20) as recited in any preceding claim, wherein the first circumferential mate face (70e) has a first groove (78), the second circumferential mate face (70f) has a second groove (78) that faces the first groove (78) such that the first groove (78) and the second groove (78) form a slot (80), the first circumferential mate face (70e) has a land (64a) that interrupts the first groove (78), the CMC strip (176) is disposed in the slot (80), and the CMC strip (176) includes a notch (176a) that fits over the land (64a).

9. The gas turbine engine (20) as recited in any preceding claim, wherein the CMC arc segments (62) are uncooled.

10. The gas turbine engine (20) as recited in any preceding claim, wherein the CMC arc segments (62) are airfoil fairings.

11. The gas turbine engine (20) as recited in any preceding claim, further comprising:
a compressor section (24);
a combustor (56) in fluid communication with the compressor section (24); and
a turbine section (28) in fluid communication with the combustor (56), and the CMC arc segments (62) are in the turbine section (28).

## Patentansprüche

1. Gasturbinentriebwerk (20), umfassend:
einen Vollreifenstützring (61) benachbart zu einem Triebwerkkern-Gasweg (C);
eine Vielzahl von Bogensegmenten (62) aus Keramikmatrix-Verbundwerkstoff (CMC), die in einer Reihe zwischen dem Vollreifenstützring (61) und dem Triebwerkkern-Gasweg (C) angeordnet sind, so dass die CMC-Bogensegmente (62) einen Abschnitt des Triebwerkkern-Gaswegs (C) begrenzen, wobei jedes der CMC-Bogensegmente (62) eine Kerngaswegseite (70a), eine gegenüberliegende Nicht-Kerngaswegseite (70b), eine axial nach vorne weisende Vorderseite (70c) und eine axial nach hinten weisende Nachlaufseite (70d), eine erste umlaufende Passfläche (70e) und eine zweite umlaufende Passfläche (70f) aufweist,
wobei die erste umlaufende Passfläche (70e) an einer Schnittstelle (71) mit der zweiten umlaufenden Passfläche (70f) eines benachbarten der CMC-Bogensegmente (62) in der Reihe zusammenpasst, wobei die Nicht-Kerngaswegseite (70b) und der Vollreifenstützring (61) dort radial zwischen einem sich axial erstreckenden Durchgang (73) begrenzt sind; und
einen Leckweg (74), durch den Gas aus dem Triebwerkkern-Gasweg (C) einen axialen Abschnitt des Triebwerkkern-Gaswegs (C) umgehen kann, wobei sich der Leckweg (74) von einer stromaufwärtigen Hochdruckzone (H) des Triebwerkkern-Gaswegs (C) erstreckt, dann durch eine stromaufwärtige Stelle der Schnittstelle (71) in den sich axial erstreckenden Durchgang (73), dann durch den sich axial erstreckenden Durchgang (73), dann durch eine stromabwärtige Stelle der Schnittstelle (71) und dann in eine stromabwärtige Niederdruckzone (L) des Triebwerkkern-Gaswegs (C);
**dadurch gekennzeichnet, dass**:
das Gasturbinentriebwerk (20) ferner einen CMC-Streifen (76; 176) umfasst, der an der Schnittstelle (71) angeordnet ist, wobei der CMC-Streifen (76; 176) den Leckweg (74) sperrt, um eine Leckage des Gases durch den Leckweg (74) zu verringern.

2. Gasturbinentriebwerk (20) nach Anspruch 1, wobei der CMC-Streifen (76; 176) Fasern aufweist, die in einer Keramikmatrix angeordnet sind, und die Fasern weniger als 500 Filamente pro Faser aufweisen.

3. Gasturbinentriebwerk (20) nach Anspruch 1 oder 2, wobei der CMC-Streifen (76; 176) volumenmäßig 30 % bis 70 % Keramikfasern und 70 % bis 30 % Keramikmatrix aufweist.

4. Gasturbinentriebwerk (20) nach Anspruch 3, wobei die Keramikfasern Siliziumkarbid sind und die Keramikmatrix Siliziumkarbid ist.

5. Gasturbinentriebwerk (20) nach einem der vorhergehenden Ansprüche, wobei die erste umlaufende Passfläche (70e) eine erste Nut (78) aufweist, die zweite umlaufende Passfläche (70f) eine zweite Nut (78) aufweist, die der ersten Nut (78) gegenüberliegt, so dass die erste Nut (78) und die zweite Nut (78) einen Schlitz (80) bilden, und der CMC-Streifen (76; 176) in dem Schlitz (80) angeordnet ist.

6. Gasturbinentriebwerk (20) nach Anspruch 5, wobei der Schlitz (80) eine Beschichtung (80a) aufweist.

7. Gasturbinentriebwerk (20) nach Anspruch 6, wobei die Beschichtung (80a) eine siliziumhaltige Beschichtung ist.

8. Gasturbinentriebwerk (20) nach einem der vorhergehenden Ansprüche, wobei die erste umlaufende Passfläche (70e) eine erste Nut (78) aufweist, die zweite umlaufende Passfläche (70f) eine zweite Nut (78) aufweist, die der ersten Nut (78) gegenüberliegt, so dass die erste Nut (78) und die zweite Nut (78) einen Schlitz (80) bilden, die erste umlaufende Passfläche (70e) einen Steg (64a) aufweist, der die erste Nut (78) unterbricht, der CMC-Streifen (176) in dem Schlitz (80) angeordnet ist und der CMC-Streifen (176) eine Kerbe (176a) aufweist, die über den Steg (64a) passt.

9. Gasturbinentriebwerk (20) nach einem der vorhergehenden Ansprüche, wobei die CMC-Bogensegmente (62) ungekühlt sind.

10. Gasturbinentriebwerk (20) nach einem der vorhergehenden Ansprüche, wobei die CMC-Bogensegmente (62) Schaufelverkleidungen sind.

11. Gasturbinentriebwerk (20) nach einem der vorhergehenden Ansprüche, ferner umfassend:
einen Verdichterabschnitt (24);
eine Brennkammer (56) in Fluidverbindung mit dem Verdichterabschnitt (24); und
einen Turbinenabschnitt (28) in Fluidverbindung mit der Brennkammer (56), und wobei sich die CMC-Bogensegmente (62) in dem Turbinenabschnitt (28) befinden.

## Revendications

1. Moteur à turbine à gaz (20) comprenant :
un anneau de support de structure circulaire (61) adjacent à un trajet de gaz de noyau de moteur (C) ;
une pluralité de segments d'arc en composite à matrice céramique (CMC) (62) agencés en une rangée entre l'anneau de support de structure circulaire (61) et le trajet de gaz de noyau de moteur (C) de sorte que les segments d'arc en CMC (62) délimitent une partie du trajet de gaz de noyau de moteur (C), chacun des segments d'arc en CMC (62) présentant un côté trajet de gaz de noyau (70a), un côté trajet de gaz non-noyau (70b) opposé, un côté bord d'attaque orienté axialement vers l'avant (70c) et un côté bord de fuite orienté axialement vers l'arrière (70d), une première face d'accouplement circonférentielle (70e) et une seconde face d'accouplement circonférentielle (70f), la première face d'accouplement circonférentielle (70e) s'accouplant à une interface (71) avec la seconde face d'accouplement circonférentielle (70f) d'un segment d'arc en CMC adjacent aux segments d'arc en CMC (62) de la rangée, le côté trajet de gaz non-noyau (70b) et l'anneau de support de structure circulaire (61) les délimitant radialement entre un passage se prolongeant axialement (73) ; et
un trajet de fuite (74) à travers lequel du gaz provenant du trajet de gaz de noyau de moteur (C) peut contourner une section axiale du trajet de gaz de noyau de moteur (C), le trajet de fuite (74) se prolongeant depuis une zone de haute pression en amont (H) du trajet de gaz de noyau de moteur (C), puis à travers un emplacement en amont de l'interface (71) dans le passage se prolongeant axialement (73), puis à travers le passage se prolongeant axialement (73), puis à travers un emplacement en aval de l'interface (71), puis enfin dans une zone de basse pression en aval (L) du trajet de gaz de noyau de moteur (C) ;
**caractérisé en ce que** :
le moteur à turbine à gaz (20) comprend également une bande CMC (76 ; 176) disposée au niveau de l'interface (71), la bande CMC (76 ; 176) bloquant le trajet de fuite (74) pour réduire la fuite du gaz à travers le trajet de fuite (74).

2. Moteur à turbine à gaz (20) selon la revendication 1, dans lequel la bande CMC (76 ; 176) comporte des fibres disposées dans une matrice céramique, et les fibres présentent moins de 500 filaments par fibre.

3. Moteur à turbine à gaz (20) selon la revendication 1 ou 2, dans lequel la bande CMC (76 ; 176) comporte, en volume, de 30 % à 70 % de fibres céramiques et de 70 % à 30 % de matrice céramique.

4. Moteur à turbine à gaz (20) selon la revendication 3, dans lequel les fibres céramiques sont en carbure de silicium et la matrice céramique est en carbure de silicium.

5. Moteur à turbine à gaz (20) selon une quelconque revendication précédente, dans lequel la première face d'accouplement circonférentielle (70e) présente une première rainure (78), la seconde face d'accouplement circonférentielle (70f) présente une seconde rainure (78) qui fait face à la première rainure (78) de sorte que la première rainure (78) et la seconde rainure (78) forment une fente (80), et la bande CMC (76 ; 176) est disposée dans la fente (80).

6. Moteur à turbine à gaz (20) selon la revendication 5, dans lequel la fente (80) comporte un revêtement (80a).

7. Moteur à turbine à gaz (20) selon la revendication 6, dans lequel le revêtement (80a) est un revêtement contenant du silicium.

8. Moteur à turbine à gaz (20) selon une quelconque revendication précédente, dans lequel la première face d'accouplement circonférentielle (70e) présente une première rainure (78), la seconde face d'accouplement circonférentielle (70f) présente une seconde rainure (78) qui fait face à la première rainure (78) de sorte que la première rainure (78) et la seconde rainure (78) forment une fente (80), la première face d'accouplement circonférentielle (70e) présente une plage (64a) qui interrompt la première rainure (78), la bande CMC (176) est disposée dans la fente (80), et la bande CMC (176) comporte une encoche (176a) qui s'adapte sur la plage (64a).

9. Moteur à turbine à gaz (20) selon une quelconque revendication précédente, dans lequel les segments d'arc en CMC (62) ne sont pas refroidis.

10. Moteur à turbine à gaz (20) selon une quelconque revendication précédente, dans lequel les segments d'arc en CMC (62) sont des carénages de profil aérodynamique.

11. Moteur à turbine à gaz (20) selon une quelconque revendication précédente, comprenant également :
une section de compresseur (24) ;
une chambre de combustion (56) en communication fluidique avec la section de compresseur (24) ; et
une section de turbine (28) en communication fluidique avec la chambre de combustion (56), et les segments d'arc en CMC (62) sont dans la section de turbine (28).
